# EUROPEAN PATENT APPLICATION

(11) **EP 2 687 737 A1**
(43) Date of publication of application: **22.01.2014**
(21) Application number: 12290244.8
(22) Date of filing: 20.07.2012
(51) Int. Cl.: F16C 13/00, F16C 35/073, B29C 45/14, F16H 7/20

(54) **Roller unit with bearing and a mounting means and method for manufacturing the same**

(71) Applicant: Aktiebolaget SKF, 415 50 Göteborg (SE)
(72) Inventor: Cherioux, Laurent, 37100 Tours (FR); Lasserre, Mikael, 37700 Saint-Pierre-Des-Corps (FR); Prouteau, Thierry, 37540 Saint-Cyr-Sur-Loire (FR)
(74) Representative: Kohl, Thomas

(57) **Abstract**

The relates to a roller unit comprising a roller bearing (12), a screw (14) for mounting the roller bearing (12) onto a support, and a mounting means (16) arranged in a central bore (20) of an inner ring (18) of the roller bearing (12), wherein the mounting means (16) is provided with a central opening (22) for receiving the screw (14).

It is proposed that the mounting means (16) is made in polymer material (16),

## Description

The invention relates to a roller unit such as a belt tensioner or idler of a traction means, e.g. a belt or a chain, dedicated to be implemented in engine traction of an internal combustion engine.

Roller units of this type are generally used for tensioning or guiding traction means such as belts or chains in automobiles delivered as pre-assembled units to a car manufacturer's site. Different applications require different geometries including different pulley diameters, different types of bearing, different lengths or diameters of screws or different spacer parts ensuring a desired position of the unit when being mounted onto the pertinent support, e.g. onto a motor block or a transmission housing.

The shaft or the screw with the spacer is generally machined in steel and then press-fitted in the bearing inner ring. However, it is expensive, difficult to assemble and the assembly weight is important. The manufacturing is complicated and expensive because the shaft diameter has to be precisely manufactured and the assembly has to take place on a press. A manual assembly is not possible. Bearing units of this type are disclosed e.g. in WO 2010/006857 A1 and EP 2 339 211 A1.

The invention seeks to overcome the above problems by providing an adaptive and cost-saving design enabling an assembly by hand with the maximum of standard parts useable for different applications for the sake of cost reduction.

The invention starts from a roller unit comprising a roller bearing a screw and a mounting means arranged a central bore of an inner ring of the roller bearing. The mounting means is provided with a central opening for inserting the screw, which is used to mount the roller unit onto a support.

It is proposed that the mounting means is made in polymer material. The inventors have surprisingly found that the high precision required by car manufacturers may be achieved with polymer spacers or sleeves and that expensive machining in steel may be avoided.

A key advantage of the invention is that all the rolling assembly elements are useable for different applications, the only adaptive part for the different applications being the at least one mounting means. The mounting means may in particular be adapted for applications with different lengths between the assembly rolling and the support, e.g. the motor block, and/or different necessary screw lengths. Indeed, the thickness of the mounting means is defined for the dedicated application and may be the only parameter of the assembly to be adapted.

In addition to this, the use of a flexible polymer material leads to a reduction of the influence of the bearing internal clearance compared to the existing solution with a metallic shaft/screw. Further, the weight of the assembly may be reduced as compared to units with steel spacers.

In addition to this, it is proposed that the inner ring is overmolded with the mounting means. This reduces the number of parts and simplifies the assembly procedure further.

In one advantageous embodiment enabling the exploitation of synergies, an outer ring of the bearing is overmolded with the pulley, the pulley being made of the same material than the mounting means.

In the alternative to the overmolding, the mounting means may comprise at least one polymer sleeve press-fitted into the central bore of the inner ring. The press-fitting may be a light press-fitting with no clearance reduction in the bearing and might even be done manually, if desired,

Further, it is proposed that the mounting means comprises two polymer sleeves press-fitted from opposite directions into the central bore of the inner ring. This feature further improves the flexibility of the design. In particular, it is possible to re-use at least one of the polymer sleeves for applications requiring a different total geometry of the mounting means as a whole. The two sleeves may be identical. Alternatively, the two sleeves are not identical and only one of these sleeves is provided with an intermediate spacer portion forming a contact surface upon mounting the assembly onto its support. Alternatively, both sleeves have an intermediate portion for contact but with different thicknesses.

Further, it is proposed that the mounting means comprises at least one collar axially and radially protruding over an inner surface of the central bore of the inner ring and forming a contact surface for mounting the belt tensioner unit onto its support, in particular onto the motor block or the transmission housing. The collar may further serve as a spacer or intermediate portion between the head of the screw or the support and the inner ring. The provision of the collar may help to avoid additional separate spacers and thus reduces the number of parts.

In particular, the mounting means may comprise at least one spacer sleeve axially protruding over the inner ring and forming, as an intermediate part, a contact surface for mounting the belt tensioner unit.

A further aspect of the invention relates to a method for manufacturing a belt tensioner unit as described above.

It is proposed that the method comprises the steps overmolding the inner ring with the mounting means and then inserting the screw into the central opening of the mounting means.

The present invention may in particular be used for idlers dedicated to be implemented in engine traction. Here and in the following, the expression "belt tensioner" should be construed as comprising idlers. The usability of the invention in the context of belt tensioners or idlers of a traction means, such as a belt or a chain is particularly surprising since the technical prejudice that the required precision can only be achieved with steel parts had existed in this field of technology.

The pulley may be made of polymer, integrally molded with the outer ring or not, or may be made of stamped sheet metal. The roller bearing may be a single-row or double-row ball bearing or a bearing with cylindrical or other types of roller elements. It is perfectly possible to use cost-saving, simple rings or bearings for realizing the invention.

The above description of the invention as well as the appended claims, figures and the following description of preferred embodiments show multiple characterizing features of the invention in specific combinations. The skilled person will easily be able to consider further combinations or subcombinations of these features in order to adapt the invention as defined in the claims to his specific needs.
- Fig. 1: is a sectional view of a belt tensioner unit according to a first embodiment of the invention;
- Fig. 2: is a sectional view of a belt tensioner unit according to a second embodiment of the invention;
- Fig. 3: is a sectional view of a belt tensioner unit according to a third embodiment of the invention; and
- Fig. 4: is a sectional view of a belt tensioner unit according to a third embodiment of the invention.

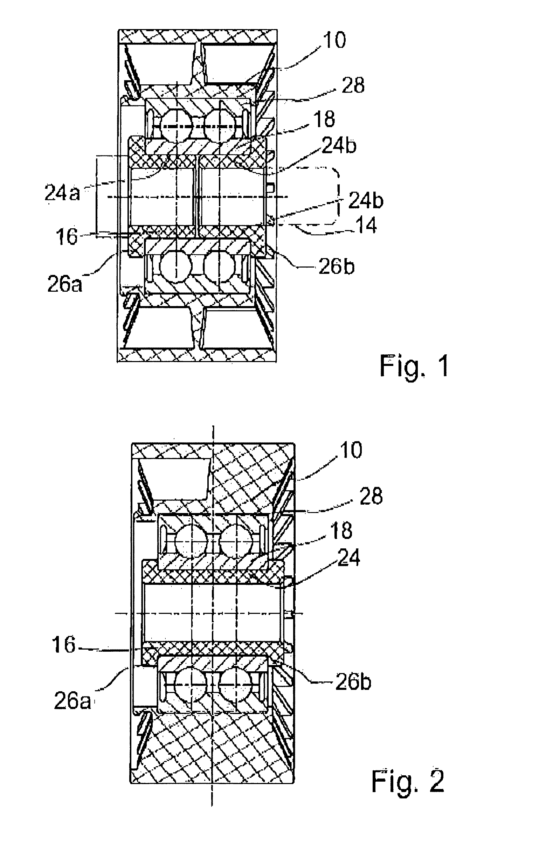

Fig. 1 is a sectional view of a belt tensioner unit according to the invention.

The belt tensioner unit is a roller unit comprising a pulley 10, a roller bearing 12, a screw 14 and a mounting means 16 generally shaped as a sleeve arranged a central bore 20 of an inner ring 18 of the roller bearing 12, wherein the mounting means 16 is provided with a central opening 22 for inserting the screw 14.

The bearing 12 is a double-row ball bearing with an inner ring 18 and an outer ring 28 each being provided with two grooves forming the raceways for the balls.

The mounting means 16 is made in polymer material such as plastics. Suitable materials include materials sold under the trade names Lubricomp EFL36 and Grivory GV-6H. It is further possible to use high-rigidity plastic or fiber-reinforced materials in order to further improve the dimensional precision and stability.

The mounting means 16 comprises a barrel-shaped central part filling a gap between the screw 14 and the bore 20 of the inner ring 18. The thickness of the material in this central part corresponds to the difference between the outer radius of the screw 14 and the inner radius of the bore 20 and may be adapted if screws 14 with other diameters or bearings with other diameters shall be used.

Further, the mounting part 16 comprises two collars 26a, 26b axially and radially protruding over an inner surface of the central bore 20 of the inner ring 18 and forming a contact surface for mounting the belt tensioner unit onto its support and/or for abutment of the screw head. The support may in particular be a motor block or a transmission housing of an automobile. The collar serves as a spacer between the head of the screw 14 and the inner ring 18 and/or between the support and the inner ring 18.

In the embodiment illustrated in Fig. 1, the mounting means 16 consists of two polymer sleeves 24a, 24b of identical shape being press-fitted from opposite directions into the central bore 20 of the inner ring 18. Each of the two polymer sleeves 24a, 24b comprises a bushing forming one half of the barrel-shaped central part of the mounting means 16 and one of the collars 26a, 26b.

Figs. 2 - 4 show further embodiments of the invention. The following description is basically limited to differences between the embodiment of Fig. 1 and the other embodiments, respectively. For unchanged features, the reader is referred to the above description of Fig. 1. The same reference numbers are used for the same or for comparable features in order to highlight the similarities.

Fig. 2 is a sectional view of a belt tensioner unit according to a second embodiment of the invention.

In the embodiment of Fig. 2, the inner ring 18 is overmolded with the mounting means 16 and an outer ring 28 of the bearing 12 is overmolded with the pulley 10. It could be possible that the pulley 10 is made of the same material as the mounting means 16 and the overmolding may even be done in the same manufacturing process. The use of an overmolded mounting ring 18 avoids an assembly procedure and reduces the number of required parts.

In addition to this, a geometry risk resulting from improper assembly of the mounting means 16 can be reduced. The collars 26a, 26b serving as spacers are integrally moulded with the inner ring 18 of the bearing.

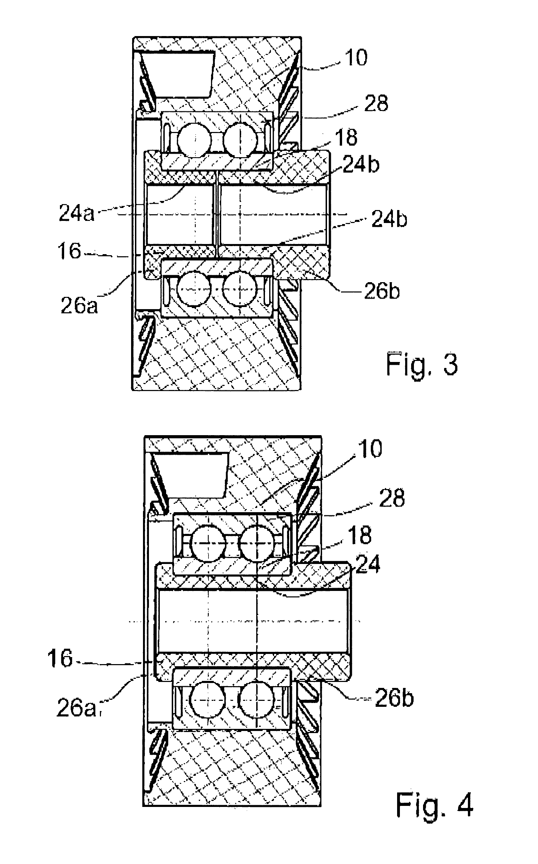

Fig. 3 is a sectional view of a belt tensioner unit according to a third embodiment of the invention.

In the embodiment illustrated in Fig. 3, the mounting means 16 consists of two polymer sleeves 24a, 24b of different shape being press-fitted from opposite directions into the central bore 20 of the inner ring 18. Each of the two polymer sleeves 24a, 24b comprises a bushing forming one half of the barrel-shaped central part of the mounting means 16 and one of the collars 26a, 26b, wherein the collar 26b on the righthand side of Fig. 3 has an axial length which is multiple times larger than the axial length or thickness of the collar 26a in the left-hand side of Fig. 3.

Fig. 4 is a sectional view of a belt tensioner unit according to a fourth embodiment of the invention.

In the embodiment illustrated in Fig. 4, the mounting means 16 has essentially the same geometry as the mounting means 16 of Fig. 3, wherein the only difference is that the mounting means 16 is manufactured by overmolding.

It should be noted that in each of the illustrated embodiments, the central opening 22 of the mounting means 16 has a simple circular cross-section and is not provided with a thread. Though is in principle possible to provide the central opening 22 of the mounting means 16 with a thread, this renders the assembly and the manufacturing of the mounting means more complicated and expensive.

Accordingly, the screw 14 can be easily inserted into the central opening 22 of the mounting means 16.

Further possible embodiments of the invention include embodiments where only one sleeve 24 with one collar 26 is press-fitted into the central bore 20 of the inner ring 18 or where an overmolded mounting means 16 is provided with only one collar 26 and does not extend beyond the axial end face of the inner ring 18 on the side opposite to the collar 26.

## Claims

1. Roller unit comprising a roller bearing (12), a screw (14) for mounting the roller bearing (12) onto a support, and a mounting means (16) arranged in a central bore (20) of an inner ring (18) of the roller bearing (12), wherein the mounting means (16) is provided with a central opening (22) for receiving the screw (14), **characterized in that** the mounting means (16) is made in polymer material (16).

2. Roller unit according to claim 1,
**characterized in that** the inner ring (18) is overmolded with the mounting means (16).

3. Roller unit according to claim 2,
**characterized in that** an outer ring (28) of the bearing is overmolded with the pulley (10), the pulley (10) being made of the same material as the mounting means (16).

4. Roller unit according to claim 1,
**characterized in that** the mounting means (16) comprises at least one polymer sleeve (24a, 24b) press-fitted into the central bore (20) of the inner ring (18).

5. Roller unit according to claim 4,
**characterized in that** the mounting means (16) comprises two polymer sleeves (24a, 24b) press-fitted from opposite directions into the central bore (20) of the inner ring (18).

6. Roller according to one of the preceding claims,
**characterized in that** the mounting means (16) comprises at least one collar axially and radially protruding over an inner surface of the central bore (20) of the inner ring (18) and forming a contact surface for mounting the roller unit.

7. Roller according to one of the preceding claims,
**characterized in that** the mounting means (16) comprises at least one spacer sleeve axially protruding over the inner ring (18) and forming a contact surface for mounting the roller unit.

8. Roller unit according to one of the preceding claims,
**characterized by** being formed as a belt tensioner unit or idler comprising a pulley (10) attached to an outer ring of the bearing (12).

9. Method for manufacturing a roller unit according to one of claims 1 - 3,
**characterized by** comprising the steps overmolding the inner ring (18) with the mounting means (18) and then inserting the screw (14) into the central opening (22) of the mounting means (18).
